# FASCICULE DE BREVET EUROPEEN

(11) **EP 3 723 002 B1**
(45) Date de publication et mention de la délivrance du brevet: **23.06.2021**
(21) Numéro de dépôt: 20168364.6
(22) Date de dépôt: 07.04.2020
(51) Int. Cl.: G06K 19/07, H04W 88/06

(54) **PUCE ÉLECTRONIQUE COMPORTANT DES INTERFACES DE COMMUNICATION**
ELEKTRONISCHER CHIP MIT KOMMUNIKATIONSSCHNITTSTELLEN
ELECTRONIC CHIP COMPRISING COMMUNICATION INTERFACES

(30) Priorité: 08.04.2019 FR 1903722
(43) Date de publication de la demande: 14.10.2020
(73) Titulaire: STMicroelectronics (Rousset) SAS, 13790 Rousset (FR)
(72) Inventeur: TRAMONI, Alexandre, 83330 LE BEAUSSET (FR); LAURENCIN, Christophe, 13124 PEYPIN (FR)
(74) Mandataire: Cabinet Beaumont

(56) Documents cités:
- EP-A1- 2 658 298
- WO-A1-2015/177602
- US-A1- 2019 069 224

## Description

### Domaine technique

La présente description concerne de façon générale les dispositifs électroniques et, plus particulièrement, les systèmes dans lesquels des composants électroniques sont interconnectés par des liaisons normalisées ISO/IEC 7816.

### Technique antérieure

Les liaisons normalisées ISO/IEC 7816 sont déjà largement utilisées pour connecter entre eux plusieurs circuits électroniques d'un même système. Il existe notamment des appareils électroniques portatifs comportant plusieurs modules d'identification d'abonné (Subscriber Identity Modules - SIM) reliés chacun, par l'intermédiaire d'une liaison normalisée ISO/IEC 7816, à un circuit modulateur-démodulateur (modem) dédié.

Le document EP2658298 décrit une puce de sécurité d'un dispositif de communication.

Le document US2019/069224 décrit un appareil de communication sans fil pour gérer l'accès à une pluralité de réseaux sans fil et un procédé de gestion associé. Résumé de l'invention

Il existe un besoin d'optimiser les dispositifs et procédés de communication existants qui mettent en oeuvre des liaisons normalisées ISO/IEC 7816.

Un mode de réalisation pallie tout ou partie des inconvénients des dispositifs et procédés de communication connus.

L'invention prévoit un dispositif électronique selon la revendication 1.

L'invention prévoit un procédé de communication selon la revendication 2.

Selon un mode de réalisation, les interfaces sont des interfaces normalisées ISO/IEC 7816.

Selon un mode de réalisation, chaque interface est reliée, de préférence connectée, par une liaison, au circuit modulateur-démodulateur qui lui est associé.

Selon un mode de réalisation, chaque interface comporte :
un module dédié à assurer des fonctions de communication du module embarqué d'identification d'abonné ; et
un autre module constituant une zone mémoire tampon.

Selon un mode de réalisation, le module embarqué d'identification d'abonné est intégré dans un boîtier.

Selon un mode de réalisation, le boîtier est monté sur une carte électronique.

Selon un mode de réalisation, un module de communication en champ proche est adapté à alimenter le module embarqué d'identification d'abonné.

Selon un mode de réalisation, chaque circuit modulateur-démodulateur est adapté à alimenter le module de communication en champ proche.

Selon un mode de réalisation, le module embarqué d'identification d'abonné comporte :
au moins une unité de traitement ;
au moins un module cryptographique ;
au moins deux modules de communication dédiés aux interfaces ; et
au moins un bus de communication interne ; et/ou
au moins une zone mémoire de stockage non volatil ; et/ou
au moins une zone mémoire de stockage volatil.

Un mode de réalisation prévoit un téléphone mobile comprenant un dispositif tel que décrit.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
La figure 1 représente, de façon schématique et sous forme de blocs, un exemple de dispositif connu de la personne du métier comportant des liaisons normalisées ISO/IEC 7816 ;
La figure 2 représente, de façon schématique et sous forme de blocs, un mode de réalisation d'un dispositif comportant des liaisons normalisées ISO/IEC 7816 ;
La figure 3 représente, de façon schématique et sous forme de blocs, un mode de réalisation de circuits électroniques reliés par des liaisons normalisées ISO/IEC 7816 ;
La figure 4 représente, de façon schématique et sous forme de blocs, un mode de réalisation d'une puce électronique d'un module embarqué d'identification d'abonné ;
La figure 5 représente, de façon schématique et sous forme de blocs, un autre mode de réalisation d'une puce électronique d'un module embarqué d'identification d'abonné ; et
La figure 6 représente un exemple de système comportant un module embarqué d'identification d'abonné.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la génération des signaux à transmettre par les liaisons normalisées ISO/IEC 7816 et le traitement de ces signaux par les différents circuits reliés entre eux par ces liaisons ne sont pas détaillés, les modes de réalisation décrits étant compatibles avec les transmissions usuelles entre deux ou plusieurs circuits sur des liaisons normalisées ISO/IEC 7816.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Dans la description qui suit, pour simplifier, on fera référence à des liaisons normalisées ISO/IEC 7816 pour désigner des liaisons de communication conformes aux exigences de la norme ISO/IEC 7816, par exemple conformes aux exigences de la partie 3 de la norme ISO/IEC 7816 dans sa version de 2006 (ISO/IEC 7816-3:2006 Cartes à contacts - Interface électrique et protocoles de transmission).

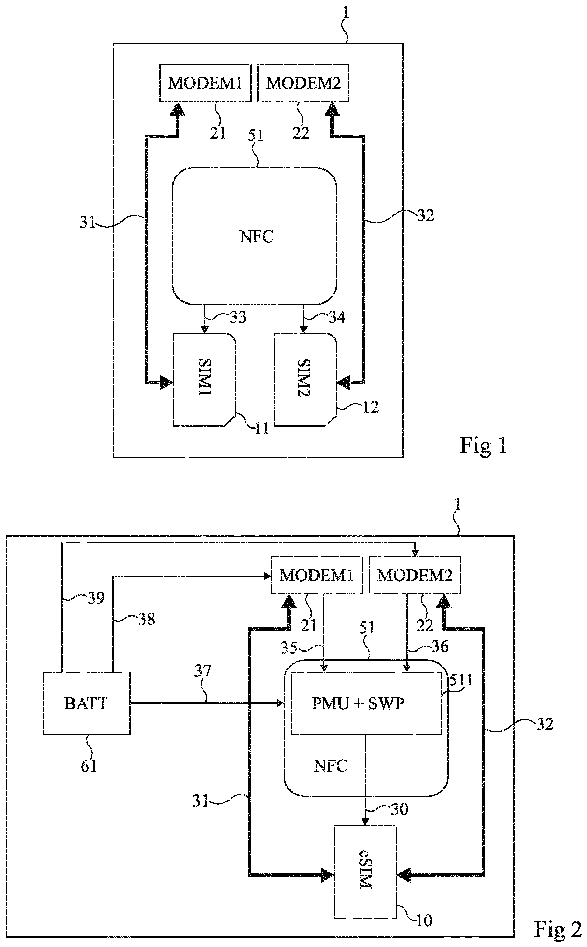

La figure 1 représente, de façon schématique et sous forme de blocs, un exemple de dispositif 1 comportant des liaisons normalisées ISO/IEC 7816.

Dans cet exemple, le dispositif 1 (par exemple, un appareil électronique portatif, par exemple un téléphone mobile, un smartphone ou une tablette tactile) comporte deux cartes 11 (SIM1) et 12 (SIM2) d'identification d'abonné ou cartes SIM (Subscriber Identity Module). Les deux cartes SIM 11 et 12 sont respectivement reliées (flèches bidirectionnelles 31 et 32), de préférence connectées, à des circuits 21 (MODEM1) et 22 (MODEM2) modulateurs-démodulateurs, ou modems, qui leur sont dédiés. En figure 1, les flèches 31 et 32 représentent chacune une liaison normalisée ISO/IEC 7816. En d'autres termes :
la carte SIM 11 est connectée au modem 21 par l'intermédiaire de la liaison 31 normalisée ISO/IEC 7816 ; et
la carte SIM 12 est connectée au modem 22 par l'intermédiaire de la liaison 32 normalisée ISO/IEC 7816.

Les cartes SIM 11 et 12 sont, en outre, respectivement reliées (flèches 33 et 34), de préférence connectées, à un module 51 de communication en champ proche (Near-Field Communication - NFC) les alimentant. En figure 1, les flèches 33 et 34 représentent chacune une liaison adaptée à véhiculer une alimentation électrique. En d'autres termes :
le module 51 de communication en champ proche alimente électriquement la carte SIM 11 par l'intermédiaire de la liaison 33 ; et
le module 51 de communication en champ proche alimente électriquement la carte SIM 12 par l'intermédiaire de la liaison 34.

Il existe aussi des configurations dans lesquelles le dispositif 1 est dépourvu du module 51 de communication en champ proche. Les cartes SIM 11 et 12 sont, le cas échéant, alimentées chacune par une liaison supplémentaire (non représentée) provenant du modem 21, pour la carte SIM 11, et du modem 22, pour la carte SIM 12.

Dans l'exemple de la figure 1, les cartes SIM 11 et 12 sont des cartes à puce (Universal Integrated Circuit Card - UICC) amovibles. Les cartes SIM 11 et 12 sont typiquement insérées dans des emplacements (slots) ou logements (non représentés) appropriés du dispositif 1.

Chaque carte SIM 11, 12 contient, en général, des informations spécifiques à un contrat ou abonnement souscrit par un abonné auprès d'un opérateur ou fournisseur d'accès (par exemple, un opérateur de réseau de téléphonie mobile ou un fournisseur d'accès à internet). Ces informations prennent la forme, par exemple, d'un code pays, d'un identifiant propre à l'opérateur et d'un identifiant propre à l'abonné.

Dans l'exemple de la figure 1, les cartes SIM 11 et 12 permettent au dispositif 1 de se connecter simultanément, par l'intermédiaire des modems 21 et 22, à deux réseaux sans fil (non représentés). Ces deux réseaux sont généralement distincts. Par exemple, ces réseaux appartiennent à des opérateurs différents, ou sont exploités par des opérateurs différents. Un utilisateur du dispositif 1 est ainsi en mesure d'échanger des informations (par exemple, voix, messages et/ou données) avec d'autres utilisateurs par l'intermédiaire de ces deux réseaux.

La figure 2 représente, de façon schématique et sous forme de blocs, un mode de réalisation d'un dispositif comportant des liaisons normalisées ISO/IEC 7816.

Selon ce mode de réalisation préféré, un seul module 10 embarqué d'identification d'abonné (embedded Subscriber Identity Module - eSIM) remplace les deux cartes SIM 11 et 12 (figure 1).

Dans l'exemple de la figure 2, le module 10 d'identification d'abonné est un circuit intégré embarqué (embedded Universal Integrated Circuit Card - eUICC) non amovible. Une telle configuration procure notamment, au dispositif 1, une meilleure résistance à des sollicitations mécaniques par rapport à l'exemple exposé en relation avec la figure 1. Le module 10 étant maintenu solidaire du dispositif 1, des vibrations sont, en particulier, peu susceptibles d'affecter une continuité électrique dans des zones de reprises de contacts (non représentées) situées entre le module 10 et les liaisons 31 et 32. On améliore ainsi une continuité de service du dispositif 1.

Le dispositif 1 comporte des modems 21 et 22 du type de ceux décrits en relation avec la figure 1 et un module de communication en champ proche 51 (NFC). Le module 51 comporte un élément 511 (PMU + SWP) pourvu, par exemple, d'une unité de gestion de l'alimentation (Power Management Unit - PMU) et d'un module de communication mettant par exemple en oeuvre un protocole de type SWP (Single Wire Protocol).

Le module 51 de communication en champ proche du dispositif 1 tire son alimentation électrique :
soit d'une source 61 (BATT) d'énergie électrique (par exemple, une batterie embarquée dans le dispositif 1) (flèche 37) ;
soit des modems 21 et 22 (flèches 35 et 36).

Dans l'exemple de la figure 2, le module 10 embarqué d'identification d'abonné tire son alimentation électrique de l'élément 511 (flèche 30) associé au module 51 de communication en champ proche. Les deux liaisons d'alimentation 33 et 34 (figure 1) sont ainsi remplacées, en figure 2, par une seule liaison 30.

Le module 10 embarqué d'identification d'abonné peut, par conséquent, bénéficier de trois voies d'alimentation redondantes :
une première voie d'alimentation issue du modem 21 connecté à la source 61 d'énergie électrique (liaison 38) empruntant directement la liaison 31 normalisée ISO/IEC 7816 ;
une deuxième voie d'alimentation issue du modem 22 connecté à la source 61 d'énergie électrique (liaison 39) empruntant directement la liaison 32 normalisée ISO/IEC 7816 ; et
une troisième voie d'alimentation issue des modems 21 et 22 connectés à la source 61 d'énergie électrique (liaisons 38 et 39, respectivement) alimentant indirectement le module 10 embarqué d'identification d'abonné par l'intermédiaire de l'élément 511 du module 51 de communication en champ proche.

Le module 10 embarqué d'identification d'abonné dispose, de préférence, de fonctionnalités similaires à celles des cartes SIM 11 et 12, comme exposé en relation avec la figure 1. Cela présente alors plusieurs avantages :
les deux cartes SIM 11 et 12 (figure 1) sont remplacées par un seul module 10, ce qui est susceptible de diminuer des coûts de conception et de fabrication du dispositif 1 ;
le module 10 occupe généralement une surface inférieure à celle des deux cartes SIM 11 et 12 (figure 1) réunies, ce qui peut permettre une intégration du module 10 dans un dispositif 1 de taille plus petite ; et
le module 10 est installé à demeure dans le dispositif 1, ce qui évite toute manipulation du module d'identification d'abonné par l'utilisateur, et réduit ainsi les risques de détérioration et de panne.

En variante, le module 10 embarqué d'identification d'abonné est connecté, par l'intermédiaire d'une ou plusieurs autres liaisons (non représentées) normalisées ISO/IEC 7816, à un ou plusieurs autres modems (non représentés). Le dispositif 1 est alors adapté à se connecter à un nombre de réseaux identique à un nombre de modems et de liaisons normalisées ISO/IEC 7816 équipant le dispositif 1.

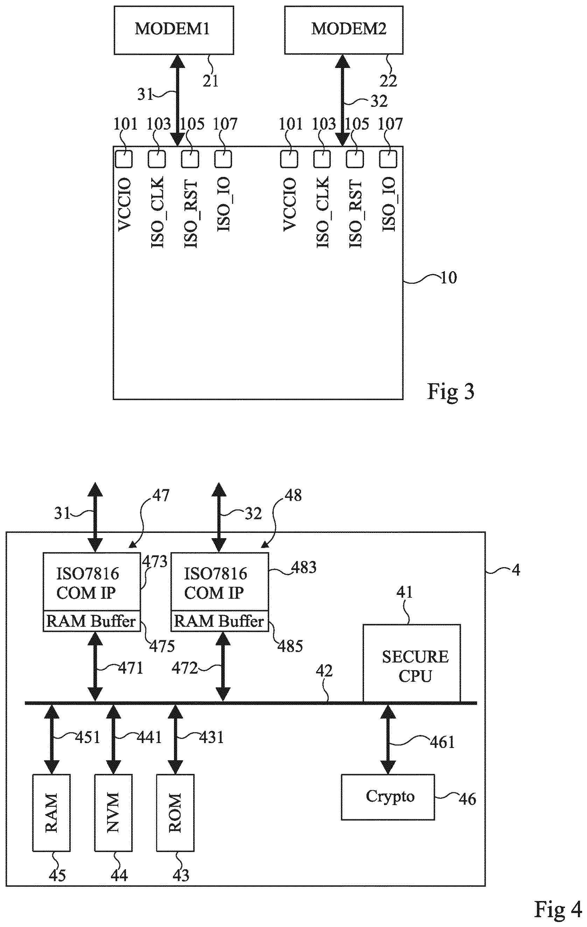

La figure 3 représente, de façon schématique et sous forme de blocs, un mode de réalisation de circuits électroniques reliés par des liaisons normalisées ISO/IEC 7816.

Selon ce mode de réalisation, le module 10 embarqué d'identification d'abonné est constitué d'un circuit intégré embarqué (embedded Universal Integrated Circuit Card - eUICC). Ce circuit 10 échange des informations avec le modem 21 (MODEM1) et avec le modem 22 (MODEM2). Selon un mode de réalisation préféré, les échanges entre le circuit 10 et les deux modems 21 et 22 ont lieu de façon simultanée. Les échanges entre le circuit 10 et les modems 21 et 22 sont respectivement portés par les liaisons 31 et 32 normalisées ISO/IEC 7816.

Les modems 21 et 22 sont, par exemple, adaptés à établir une communication avec deux réseaux de téléphonie mobile (non représentés) . Les modems 21 et 22 permettent ainsi au circuit 10 d'échanger des données (par exemple, des données représentatives de signaux vocaux, de messages etc.) avec ces deux réseaux.

Dans l'exemple de la figure 3, chaque liaison 31, 32 normalisée ISO/IEC 7816 est raccordée au circuit 10 par un ensemble d'éléments 101, 103, 105 et 107 de reprise de contact ou plots. Chaque ensemble comporte :
un plot 101 (VCCIO), sur lequel est appliqué un signal d'alimentation ;
un plot 103 (ISO_CLK), sur lequel est appliqué un signal de synchronisation ou signal d'horloge ;
un plot 105 (ISO_RST), sur lequel est appliqué un signal de réinitialisation (reset) ; et
un plot 107 (ISO_IO) d'entrée-sortie, sur lequel est appliqué un signal représentatif d'une information à transmettre.

Les plots 101, 103, 105 et 107 permettent ainsi au circuit 10 d'être alimenté par les modems 21 et 22 (liaisons 31 et 32, respectivement) et d'échanger des informations avec ces mêmes modems 21 et 22. Selon un autre mode de réalisation, le circuit 10 comporte d'autres plots (non représentés), en particulier un plot de masse porté à un potentiel de référence.

La figure 4 représente, de façon schématique et sous forme de blocs, un mode de réalisation d'une puce électronique d'un module embarqué d'identification d'abonné.

Selon ce mode de réalisation, une puce 4 électronique comporte une unité 41 (SECURE CPU) de traitement, ou microprocesseur, ou microcontrôleur, ou calculateur. Cette unité 41 de traitement est reliée, de préférence connectée, à un bus 42 de communication interne à la puce 4. L'unité 41 de traitement de la puce 4 est, par exemple, adaptée à cadencer ou organiser des échanges de données sur le bus 42 de communication interne.

Des zones mémoires (ou circuits mémoires) de stockage non volatil (bloc 43, ROM ou bloc 44, NVM) et/ou de stockage volatil (bloc 45, RAM) sont également reliées, de préférence connectées (liaisons 431, 441 et 451, respectivement), au bus interne 42. Un module cryptographique 46 (Crypto) est aussi relié, de préférence connecté (liaison 461), au bus interne 42.

Dans l'exemple de la figure 4, la puce 4 comporte, en outre, deux interfaces 47 et 48 normalisées ISO/IEC 7816. Les deux interfaces 47 et 48 permettent notamment à l'unité 41 de traitement d'échanger des données sur des liaisons (non représentées) normalisées ISO/IEC 7816. Ces deux interfaces 47 et 48 comportent chacune, par exemple :
un module 473, respectivement 483 (ISO7816 COM IP), dédié à assurer des fonctions de communication de la puce 4 sur une liaison normalisée ISO/IEC 7816 ;
un module 475, respectivement 485 (RAM Buffer), constituant une zone mémoire tampon.

Selon un mode de réalisation préféré, la puce 4 constitue le module 10 embarqué d'identification d'abonné (figures 2 et 3). La puce 4 est, le cas échéant, intégrée dans un boîtier (non représenté) monté sur une carte électronique (non représentée). Les deux interfaces 47 et 48 normalisées ISO/IEC permettent alors au circuit 4 de communiquer avec les modems 21 et 22 par l'intermédiaire des liaisons 31 et 32, respectivement. En d'autres termes, les interfaces 47 et 48 normalisées ISO/IEC 7816 du circuit 4 sont configurées chacune pour communiquer avec le circuit 21, 22 modulateur-démodulateur associé.

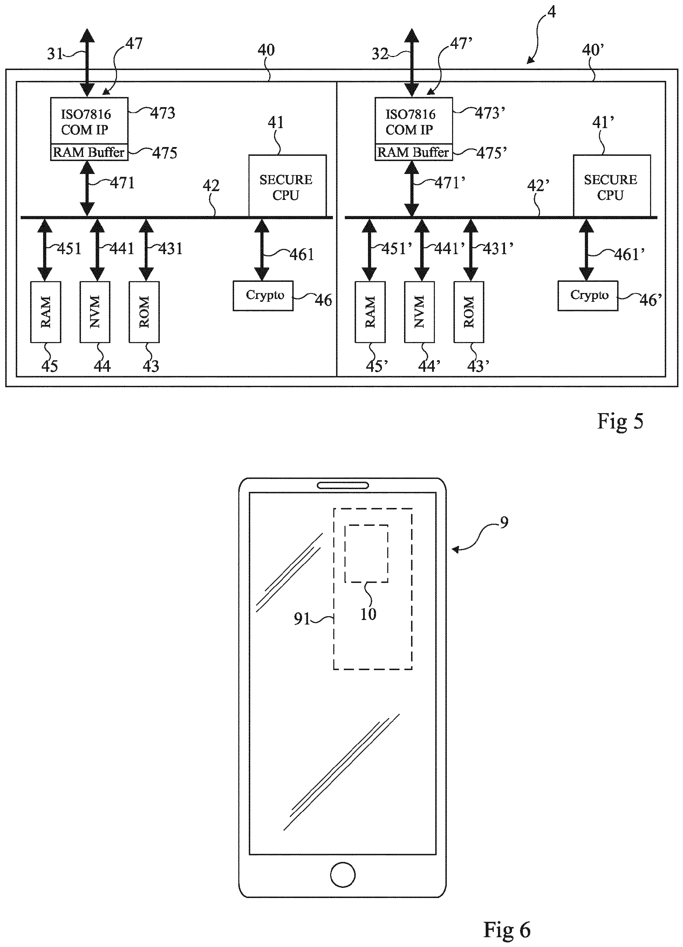

La figure 5 représente, de façon schématique et sous forme de blocs, un autre mode de réalisation d'une puce électronique 4 d'un module embarqué d'identification d'abonné.

Selon ce mode de réalisation, la puce électronique 4 se compose de deux unités fonctionnelles 40 et 40'. L'unité fonctionnelle 40 reprend la plupart des éléments constitutifs de la puce 4 précédemment décrite en relation avec la figure 4, à l'exception de l'interface 48 normalisée ISO/IEC 7816 et de la liaison 472 dont est dépourvue, en figure 5, l'unité fonctionnelle 40.

L'unité fonctionnelle 40 se compose ainsi :
de l'unité 41 de traitement reliée, de préférence connectée, au bus 42 de communication interne ;
des zones mémoires (ou circuits mémoires) de stockage non volatil 43, 44 et/ou de stockage volatil 45 reliées, de préférence connectées (liaisons 431, 441 et 451, respectivement), au bus interne 42 de l'unité fonctionnelle 40 ;
du module cryptographique 46 lui aussi relié, de préférence connecté (liaison 461), au bus interne 42 ; et
de l'interface 47 normalisée ISO/IEC 7816, composée des modules 473 et 475, et reliée, de préférence connectée (liaison 471), au bus interne 42.

L'unité fonctionnelle 40' est semblable à l'unité fonctionnelle 40. L'unité fonctionnelle 40' se compose ainsi :
d'une unité 41' (SECURE CPU) de traitement reliée, de préférence connectée, à un bus 42' de communication interne à l'unité fonctionnelle 40' ;
de zones mémoires (ou circuits mémoires) de stockage non volatil (bloc 43', ROM ou bloc 44', NVM) et/ou de stockage volatil (bloc 45', RAM) reliées, de préférence connectées (liaisons 431', 441' et 451', respectivement), au bus interne 42' de l'unité fonctionnelle 40' ;
d'un module cryptographique 46' (Crypto) lui aussi relié, de préférence connecté (liaison 461'), au bus interne 42' ; et
d'une interface 47' normalisée ISO/IEC 7816, composée de deux modules 473' (ISO7816 COM IP) et 475' (RAM Buffer), reliée, de préférence connectée (liaison 471'), au bus interne 42'.

En d'autres termes, les deux unités fonctionnelles 40 et 40' du circuit 4 disposent chacune d'un processeur 41, 41' affecté au pilotage d'une interface 47, 47' normalisée ISO/IEC 7816.

Selon un mode de réalisation préféré, la puce 4 est intégrée dans un boîtier (non représenté) et forme ainsi un circuit, par exemple le module 10 embarqué d'identification d'abonné (figures 2 et 3). Les deux interfaces 47 et 47' normalisées ISO/IEC 7816 permettent alors au circuit 4 du module 10 de communiquer avec les modems 21 et 22 par l'intermédiaire des liaisons 31 et 32, respectivement.

La figure 6 représente un exemple de système comportant un module embarqué d'identification d'abonné.

Dans l'exemple de la figure 6, un équipement 9 électronique portatif ou terminal mobile (par exemple, un téléphone mobile, un smartphone ou une tablette tactile) comporte une carte 91 électronique (par exemple, une carte mère ou une carte adaptée à assurer des fonctionnalités de communication). Le module 10 embarqué d'identification d'abonné est monté sur la carte électronique 91. Le module 10 est adapté à connecter l'équipement 9 à au moins deux réseaux de communication (non représentés) distincts. Un utilisateur est donc en mesure d'échanger, de préférence simultanément, des données sur plusieurs réseaux de communication à partir d'un même terminal 9. L'équipement 9 est ainsi configuré pour mettre en oeuvre le procédé décrit.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, les modes de réalisation exposés en relation avec les figures 4 et 5 peuvent être combinés afin d'obtenir, par exemple, une puce électronique 4 comportant des unités 41 et 41' de traitement pilotant chacune plusieurs interfaces normalisées ISO/IEC 7816.

Enfin, la mise en oeuvre pratique des modes de réalisation et variantes décrits est à la portée de l'homme du métier à partir des indications fonctionnelles données ci-dessus. En particulier, le nombre d'interfaces normalisées ISO/IEC 7816 incluses dans chaque circuit peut être augmenté pour s'adapter, par exemple, à des besoins de communication d'un dispositif comportant plus de deux modems.

## Revendications

1. Dispositif électronique (1) comprenant un module (10) embarqué d'identification d'abonné sous forme de puce (4) électronique comportant plusieurs interfaces (47, 48 ; 47, 47') configurées chacune pour communiquer avec un circuit (21, 22) modulateur-démodulateur associé, chaque interface comprenant :
un premier plot (101) sur lequel est appliqué un signal d'alimentation ;
un deuxième plot (103) sur lequel est appliqué un signal de synchronisation ;
un troisième plot (105) sur lequel est appliqué un signal de réinitialisation ; et
un quatrième plot (107) d'entrée-sortie sur lequel est appliqué un signal représentatif d'une information à transmettre.

2. Procédé de communication, dans lequel un même module (10) embarqué d'identification d'abonné d'une puce (4) électronique contrôle plusieurs interfaces (47, 48 ; 47, 47') configurées chacune pour communiquer avec un circuit (21, 22) modulateur-démodulateur associé, chaque interface comprenant :
un premier plot (101) sur lequel est appliqué un signal d'alimentation ;
un deuxième plot (103) sur lequel est appliqué un signal de synchronisation ;
un troisième plot (105) sur lequel est appliqué un signal de réinitialisation ; et
un quatrième plot (107) d'entrée-sortie sur lequel est appliqué un signal représentatif d'une information à transmettre.

3. Dispositif selon la revendication 1 ou procédé selon la revendication 2, dans lequel les interfaces (47, 48 ; 47, 47') sont des interfaces normalisées ISO/IEC 7816.

4. Dispositif selon la revendication 1 ou 3, ou procédé selon la revendication 2 ou 3, dans lequel chaque interface (47, 48 ; 47, 47') est reliée, de préférence connectée, par une liaison (31, 32), au circuit (21, 22) modulateur-démodulateur qui lui est associé.

5. Dispositif selon la revendication 1, 3 ou 4, ou procédé selon l'une quelconque des revendications 2 à 4, dans lequel chaque interface (47, 48 ; 47, 47') comporte :
un module (473, 483) dédié à assurer des fonctions de communication du module (10) embarqué d'identification d'abonné ; et
un autre module (475, 485) constituant une zone mémoire tampon.

6. Dispositif selon l'une quelconque des revendications 1, 3 à 5, ou procédé selon l'une quelconque des revendications 2 à 5, dans lequel le module (10) embarqué d'identification d'abonné est intégré dans un boîtier.

7. Dispositif ou procédé selon la revendication 6, dans lequel le boîtier est monté sur une carte (91) électronique.

8. Dispositif selon l'une quelconque des revendications 1, 3 à 7, ou procédé selon l'une quelconque des revendications 2 à 7, dans lequel un module (51) de communication en champ proche est adapté à alimenter le module (10) embarqué d'identification d'abonné.

9. Dispositif ou procédé selon la revendication 8, dans lequel chaque circuit (21, 22) modulateur-démodulateur est adapté à alimenter le module (51) de communication en champ proche.

10. Dispositif selon l'une quelconque des revendications 1, 3 à 9, ou procédé selon l'une quelconque des revendications 2 à 9, dans lequel le module (10) embarqué d'identification d'abonné comporte :
au moins une unité (41 ; 41, 41') de traitement ;
au moins un module (46 ; 46, 46') cryptographique ;
au moins deux modules (473, 483 ; 473, 473') de communication dédiés aux interfaces (47, 48 ; 47, 47') ; et
au moins un bus (42 ; 42, 42') de communication interne ; et/ou
au moins une zone mémoire (43, 44 ; 43, 43', 44, 44') de stockage non volatil ; et/ou
au moins une zone mémoire (45 ; 45, 45') de stockage volatil.

11. Téléphone mobile (9), comprenant un dispositif (1) selon l'une quelconque des revendications 1, 3 à 10.

## Patentansprüche

1. Elektronische Vorrichtung (1) mit einem eingebetteten Teilnehmeridentitätsmodul (10) in Form eines elektronischen Chips (4), der eine Vielzahl von Schnittstellen (47, 48; 47, 47') aufweist, die jeweils so konfiguriert sind, dass sie mit einer zugehörigen Modulator-Demodulator-Schaltung (21, 22) kommunizieren, wobei jede Schnittstelle Folgendes aufweist:
ein erstes Kontaktfeld (101), an das ein Versorgungssignal angelegt wird;
ein zweites Kontaktfeld (103), an das ein Synchronisationssignal angelegt wird;
einen drittes Kontaktfeld (105), an das ein Rücksetzsignal angelegt wird; und
ein viertes Eingangs-/Ausgangs-Kontaktfeld (107), an das ein Signal angelegt wird, das für zu sendende Informationen repräsentativ ist.

2. Kommunikationsverfahren, wobei ein gleiches eingebettetes Teilnehmeridentitätsmodul (10) eines elektronischen Chips (4) eine Vielzahl von Schnittstellen (47, 48; 47, 47') steuert, die jeweils so konfiguriert sind, dass sie mit einer zugehörigen Modulator-Demodulator-Schaltung (21, 22) kommunizieren, wobei jede Schnittstelle Folgendes aufweist:
ein erstes Kontaktfeld (101), an das ein Versorgungssignal angelegt wird;
ein zweites Kontaktfeld (103), an das ein Synchronisationssignal angelegt wird;
einen drittes Kontaktfeld (105), an das ein Rücksetzsignal angelegt wird; und
ein viertes Eingangs-/Ausgangs-Kontaktfeld (107), an das ein Signal angelegt wird, das für zu sendende Informationen repräsentativ ist.

3. Vorrichtung nach Anspruch 1 oder Verfahren nach Anspruch 2, wobei die Schnittstellen (47, 48; 47, 47') nach ISO/IEC 7816 genormte Schnittstellen sind.

4. Vorrichtung nach Anspruch 1 oder 3 oder Verfahren nach Anspruch 2 oder 3, wobei jede Schnittstelle (47, 48; 47, 47') über einen Link (31, 32) mit ihrer zugehörigen Modulator-Demodulator-Schaltung (21, 22) gekoppelt, vorzugsweise verbunden ist.

5. Vorrichtung nach Anspruch 1, 3 oder 4 oder Verfahren nach einem der Ansprüche 2 bis 4, wobei jede Schnittstelle (47, 48; 47, 47') Folgendes aufweist:
ein Modul (473, 483), das für die Durchführung von Kommunikationsfunktionen des eingebetteten Teilnehmeridentitätsmoduls (10) vorgesehen ist; und
ein weiteres Modul (475, 485), das eine Pufferspeicherzone bildet.

6. Vorrichtung nach einem der Ansprüche 1, 3 bis 5 oder das Verfahren nach einem der Ansprüche 2 bis 5, wobei das eingebettete Teilnehmeridentitätsmodul (10) in ein Gehäuse integriert ist.

7. Vorrichtung oder Verfahren nach Anspruch 6, wobei das Gehäuse auf einer elektronischen Karte (91) montiert ist.

8. Vorrichtung nach einem der Ansprüche 1, 3 bis 7 oder Verfahren nach einem der Ansprüche 2 bis 7, wobei ein Nahfeldkommunikationsmodul (51) so konfiguriert ist, dass es das eingebettete Teilnehmeridentitätsmodul (10) mit Strom versorgt.

9. Vorrichtung oder Verfahren nach Anspruch 8, wobei jede Modulator-Demodulator-Schaltung (21, 22) konfiguriert ist, um das Nahfeldkommunikationsmodul (51) mit Strom zu versorgen.

10. Vorrichtung nach einem der Ansprüche 1, 3 bis 9 oder das Verfahren nach einem der Ansprüche 2 bis 9, wobei das eingebettete Teilnehmeridentitätsmodul (10) Folgendes aufweist:
mindestens eine Verarbeitungseinheit (41; 41, 41');
mindestens ein kryptographisches Modul (46; 46, 46');
mindestens zwei Kommunikationsmodule (473, 483; 473, 473'), die den Schnittstellen (47, 48; 47, 47') zugeordnet sind; und
mindestens einen internen Kommunikationsbus (42; 42, 42'); und/oder mindestens einen nichtflüchtigen Speicherbereich (43, 44; 43, 43', 44, 44'); und/oder
mindestens einen flüchtigen Speicherbereich (45; 45, 45').

11. Mobiltelefon (9), das eine Vorrichtung (1) nach einem der Ansprüche 1, 3 bis 10 aufweist.

## Claims

1. An electronic device (1) comprising an embedded subscriber identity module (10) in the form of an electronic chip (4) including a plurality of interfaces (47, 48; 47, 47') each configured to communicate with a dedicated modulator-demodulator circuit (21, 22), each interface comprising:
a first pad (101) on which a supply signal is applied;
a second pad (103) on which a synchronization signal is applied;
a third pad (105) on which a reset signal is applied; and
a fourth input-output pad (107) on which a signal representative of information to be sent is applied.

2. A communication method, in which a same embedded subscriber identity module (10) of an electronic chip (4) controls a plurality of interfaces (47, 48; 47, 47') each configured to communicate with a dedicated modulator-demodulator circuit (21, 22), each interface comprising:
a first pad (101) on which a supply signal is applied;
a second pad (103) on which a synchronization signal is applied;
a third pad (105) on which a reset signal is applied; and
a fourth input-output pad (107) on which a signal representative of information to be sent is applied.

3. The device according to claim 1 or method according to claim 2, wherein the interfaces (47, 48; 47, 47') are ISO/IEC 7816 standardized interfaces.

4. The device according to claim 1 or 3, or method according to claim 2 or 3, wherein each interface (47, 48; 47, 47') is coupled, preferably connected, by a link (31, 32), to its dedicated modulator-demodulator circuit (21, 22).

5. The device according to claim 1, 3 or 4, or method according to any one of claims 2 to 4, wherein each interface (47, 48; 47, 47') comprises:
a module (473, 483) dedicated to performing communication functions of the embedded subscriber identity module (10); and
another module (475, 485) forming a buffer memory zone.

6. The device according to any one of claims 1, 3 to 5, or method according to any one of claims 2 to 5, wherein the embedded subscriber identity module (10) is integrated into a package.

7. The device or method according to claim 6, wherein the package is mounted on an electronic circuit board (91).

8. The device according to any one of claims 1, 3 to 7, or method according to any one of claims 2 to 7, wherein a near-field communication module (51) is configured to supply power to the embedded subscriber identity module (10) .

9. The device or method according to claim 8, wherein each modulator-demodulator circuit (21, 22) is configured to supply power to the near-field communication module (51).

10. The device according to any one of claims 1, 3 to 9, or method according to any one of claims 2 to 9, wherein the embedded subscriber identity module (10) includes:
at least one processing unit (41; 41, 41');
at least one cryptographic module (46; 46, 46');
at least two communication modules (473, 483; 473, 473') dedicated to the interfaces (47, 48; 47, 47'); and at least one internal communication bus (42; 42, 42'); and/or
at least one non-volatile memory storage area (43, 44; 43, 43', 44, 44'); and/or
at least one volatile memory storage area (45; 45, 45').

11. A mobile telephone (9), comprising a device (1) according to any one of claims 1, 3 to 10.
